# EUROPÄISCHE PATENTSCHRIFT

(11) **EP 2 343 520 B1**
(45) Veröffentlichungstag und Bekanntmachung des Hinweises auf die Patenterteilung: **18.04.2018**
(21) Anmeldenummer: 10015398.0
(22) Anmeldetag: 07.12.2010
(51) Int. Cl.: G01G 11/00, G01G 11/04

(54) **Mehrspurwaage**
Multi-track scale
Balance à plusieurs voies

(30) Priorität: 23.12.2009 DE 102009060234
(43) Veröffentlichungstag der Anmeldung: 13.07.2011
(73) Patentinhaber: Bizerba SE & Co. KG, 72336 Balingen (DE)
(72) Erfinder: Berger, Hermann, 31079 Adenstedt (DE); Oppermann, Christian, 31135 Hildesheim (DE); Horn, Sebastian, 31162 Bad Salzdetfurth (DE)
(74) Vertreter: Manitz Finsterwald Patentanwälte PartmbB

(56) Entgegenhaltungen:
- WO-A1-2009/074171
- DE-A1-102004 034 653
- US-A1- 2009 032 311

## Beschreibung

Die vorliegende Erfindung betrifft eine Mehrspurwaage, nämlich eine Mehrspurkontrollwaage, mit mehreren nebeneinander angeordneten, jeweils eine Spur der Mehrspurwaage bildenden Bandwägeeinrichtungen, die jeweils als dynamische Kontrollwaage ausgebildet sind. Derartige Mehrspurwaagen sind aus den Dokumenten DE 10 2004 034 653 A1, US 2009/0032311 A1 und WO 2009/074171 A1 bekannt.

Derartige Mehrspurwaagen sind dazu ausgelegt, in einer Produktionslinie mehrspurig ankommende Stückgüter wie Pakete, Flaschen oder Lebensmittelportionen parallel zu wiegen, so dass gegenüber einer einspurigen Waage ein höherer Durchsatz erzielbar ist.

Fällt eine der Bandwägeeinrichtungen aus oder gibt es sonstige Probleme mit der Bandwägeeinrichtung, muss diese durch eine andere Bandwägeeinrichtung ersetzt werden. Der Austausch der defekten Bandwägeeinrichtung kostet jedoch Zeit, während der die Mehrspurwaage stillsteht.

Der Erfindung liegt die Aufgabe zugrunde, eine Mehrspurwaage der eingangs genannten Art anzugeben, die es ermöglicht, Stillstandzeiten zu minimieren.

Diese Aufgabe wird durch die Merkmale des Anspruchs 1 gelöst. Vorteilhafte Weiterbildungen der Erfindung sind Gegenstand der abhängigen Ansprüche. Eine modular aufgebaute Mehrspurwaage ermöglicht, bei Ausfall oder sonstigen Problemen mit einer Spur die jeweilige Bandwägeeinrichtung einfach und schnell zu wechseln. Durch die schnelle Auswechselbarkeit der einzelnen Bandwägeeinrichtungen können Stillstandzeiten minimiert werden. Darüber hinaus kann die Mehrspurwaage, die mit Bandwägeeinrichtungen einer bestimmten Spurbreite bestückt ist, einfach und schnell auf Bandwägeeinrichtungen mit einer anderen Spurbreite umgerüstet werden. Auch hierdurch können Stillstandzeiten minimiert werden. Die Bandwägeeinrichtungen sind als Baueinheiten bzw. als Module ausgebildet, d.h. als separat handhabbare, austauschbare, komplexe Teile der Mehrspurwaage, die jeweils eine geschlossene Funktionseinheit bilden. Die Bandwägeeinrichtungen sind bezüglich der Transportrichtung der Mehrspurwaage nebeneinander angeordnet, welche Transportrichtung bevorzugt für alle Spuren dieselbe ist. Vorzugsweise weist die Mehrspurwaage ein insbesondere feststehendes Gestell oder Grundgestell auf, an dem die Bandwägeeinrichtungen gehaltert sind.

Die Bandwägeeinrichtungen sind jeweils quer, insbesondere senkrecht zur Transportrichtung bewegbar, insbesondere verschiebbar gelagert. Bevorzugt ist die Bewegbarkeit stufenlos ausgebildet, so dass die Bandwägeeinrichtungen innerhalb vorgegebener Grenzen letztlich an beliebiger Stelle quer zur Transportrichtung platzierbar sind. Dies schließt jedoch nicht aus, dass die jeweilige Bandwägeeinrichtung durch eine nachstehend noch näher erläuterte betätigbare Klemmeinrichtung unverschiebbar fixiert werden kann.

Die Bandwägeeinrichtungen sind jeweils auf einer Trägereinrichtung mit wenigstens einem Querträger gelagert, insbesondere gleitgelagert. Insbesondere sind zwei oder mehr parallel zueinander verlaufende Querträger vorgesehen. Bevorzugt handelt es sich bei der Trägereinrichtung um eine Trägereinrichtung, die für sämtliche Bandwägeeinrichtungen gemeinsam ist. Der jeweilige Querträger kann beispielsweise als Rundstab, T-Träger oder Vierkantstab ausgebildet sein.

Nach einer Ausbildung der Erfindung sind die Bandwägeeinrichtungen in radialer Richtung von dem wenigstens einen Querträger abnehmbar, insbesondere nach oben hin. Die radiale Richtung bezieht sich auf die Längsrichtung bzw. Längserstreckung des oder der Querträger. Eine Bandwägeeinrichtung, die sich zwischen anderen Bandwägeeinrichtungen befindet, kann hierdurch von der Mehrspurwaage abgenommen werden, ohne dass hierfür andere Bandwägeeinrichtungen demontiert werden müssen.

Die Bandwägeeinrichtungen können jeweils wenigstens eine insbesondere manuell betätigbare Klemmeinrichtung umfassen, um die jeweilige Bandwägeeinrichtung an der Trägereinrichtung zu fixieren. Insbesondere ist die jeweilige Klemmeinrichtung zwischen einer Klemmstellung und einer Freigabestellung verstellbar. Die jeweilige Bandwägeeinrichtung kann dadurch sicher an der Trägereinrichtung gehaltert werden. Bei zwei oder mehr Querträgern ist eine entsprechende Anzahl an Klemmeinrichtungen vorgesehen.

Vorzugsweise ist die Trägereinrichtung zwischen einer Betriebsstellung und einer Servicestellung verschwenkbar. In der Betriebsstellung der Trägereinrichtung kann die Mehrspurwaage bestimmungsgemäß betrieben werden. In der Servicestellung ist der Zugang zu den Bandwägeeinrichtungen erleichtert, so dass beispielsweise eine Reinigung, ein Tausch eines Transportgurts, ein Modulwechsel oder ein insbesondere sonstiger Service einfacher ausgeführt werden kann. Hierdurch wird die Servicefreundlichkeit der Mehrspurwaage erhöht. Insbesondere ist die Schwenkachse parallel zu der Transportrichtung der Mehrspurwaage orientiert. Bevorzugt ist der vorgenannte wenigstens eine Querträger in der Betriebsstellung zumindest im Wesentlichen waagrecht angeordnet, und in der Servicestellung gegen die Waagrechte geneigt.

Nach einer Ausführungsform der Erfindung ist für die Bandwägeeinrichtungen ein gemeinsamer Motor zum Antrieb der Bänder der Bandwägeeinrichtungen vorgesehen. Der Motor, bei dem es sich beispielsweise um einen Trommelmotor handeln kann, ist bevorzugt an dem vorgenannten Gestell befestigt.

Bevorzugt wird das Band der jeweiligen Bandwägeeinrichtungen von einer Antriebswelle angetrieben, die unterhalb des auslaufseitigen Endes der Wägeauflage der jeweiligen Bandwägeeinrichtung angeordnet ist, welche Konstruktion auch als Rüberziehprinzip bezeichnet wird.

Die Bandwägeeinrichtungen können beispielsweise über Kupplungen, Gelenkwellen oder sonstige Elemente, z.B. Federn, oder Wellengeometrien, z.B. Nut und Feder, mit dem Motor verbunden sein. Bevorzugt ist es jedoch, wenn für die Bandwägeeinrichtungen eine gemeinsame Antriebswelle vorgesehen ist. Dadurch kann die Fördergeschwindigkeit für sämtliche Bandwägeeinrichtungen gleich groß und synchron gestaltet werden.

Vorzugsweise umfassen die Bandwägeeinrichtungen jeweils eine Wägeplattform und eine an die Wägeplattform anschließende weitere Plattform, wobei die Plattformen jeweils eine sich in Transportrichtung erstreckende Länge aufweisen, und wobei zumindest die Wägeplattform längenverstellbar, nämlich auseinanderziehbar und zusammenschiebbar, ausgebildet ist.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigen,
- Fig. 1: eine perspektivische Ansicht einer erfindungsgemäßen Mehrspurwaage mit mehreren nebeneinander angeordneten Bandwägeeinrichtungen, die auf einer Trägereinrichtung vorgesehen sind, welche sich in einer Betriebsstellung befindet,
- Fig. 2: die Mehrspurwaage aus Fig. 1, wobei sich die Trägereinrichtung in einer Servicestellung befindet,
- Fig. 3: die Trägervorrichtung aus den Fig. 1 und 2 mit Querträgern und eine einzelne Bandwägeeinrichtung, und
- Fig. 4: eine Seitenansicht einer einzelnen Bandwägeeinrichtung.

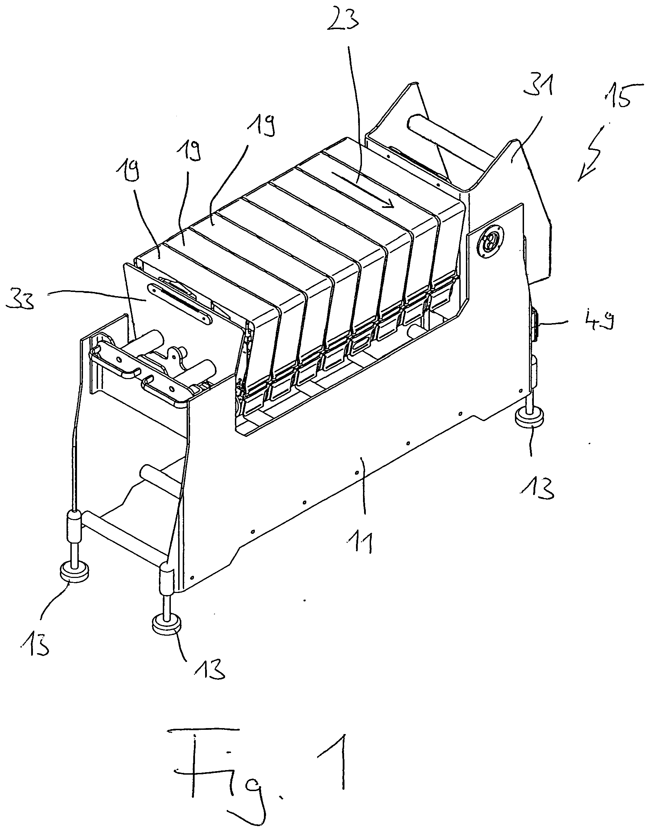

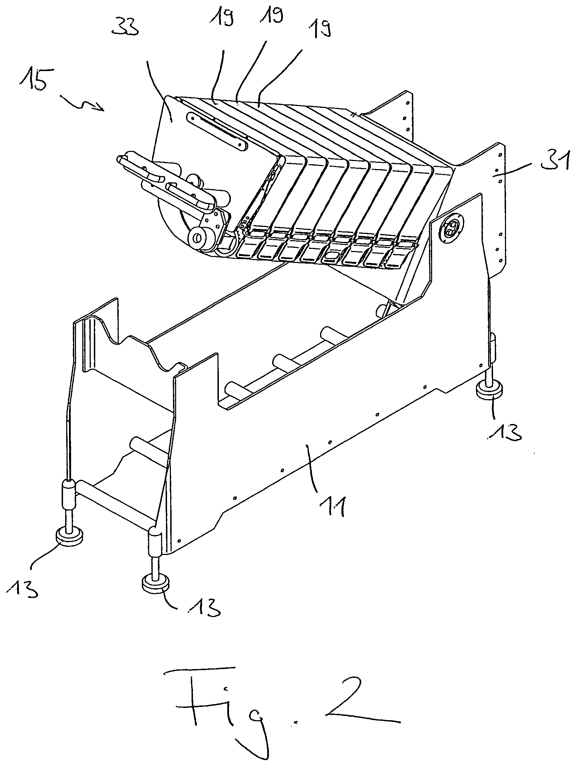

Die in Fig. 1 und 2 dargestellte Mehrspurwaage umfasst ein Grundgestell 11, das über vier Standfüße 13 auf dem Boden abgestützt ist. An dem Grundgestell 11 ist eine Trägereinrichtung 15 zwischen der in Fig. 1 gezeigten Betriebsstellung und der in Fig. 2 gezeigten Servicestellung verschwenkbar angebracht. Die schwenkbare Lagerung der Trägereinrichtung 15 an dem Grundgestell 11 erfolgt über eine Schwenkachse 17.

Darüber hinaus sind in den Fig. 1 und 2 insgesamt acht, auf der Trägereinrichtung 15 angeordnete Bandwägeeinrichtungen 19 erkennbar, um mehrspurig an der Mehrspurwaage ankommende Stückgüter wie Pakete, Flaschen oder Lebensmittelportionen parallel zu wiegen. Die Bandwägeeinrichtungen 19 bilden jeweils eine Spur der Mehrspurwaage und sind jeweils als dynamische Kontrollwaage ausgebildet, so dass auch die Mehrspurwaage eine Kontrollwaage darstellt. Bei einer dynamischen Kontrollwaage werden die zu wiegenden Waren im Durchlauf gewogen, d.h. die Messungen werden vorgenommen, während sich die insbesondere gleichgewichtigen Waren aufgrund einer kontinuierlichen Bewegung eines jeweiligen Transportgurts 21 ohne Stopp über die Wägeplattform hinwegbewegen. Grundsätzlich können die Bandwägeeinrichtungen 19 jeweils und die Mehrspurwaage auch als Preisauszeichner ausgebildet sein, insbesondere zum dynamischen Wiegen ungleichgewichtiger Waren. Die Transportrichtung 23 der Bandwägeeinrichtungen 19 ist durch einen Pfeil gekennzeichnet.

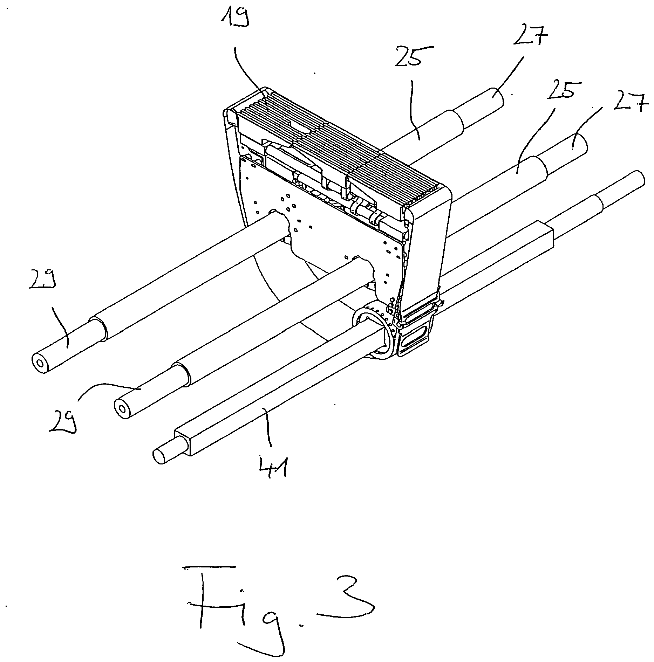

Wie insbesondere aus Fig. 3 ersichtlich ist, umfasst die Trägereinrichtung 15 zwei Querträger 25, die sich jeweils senkrecht zur Transportrichtung 23 erstrecken und jeweils ein erstes Ende 27 und eine zweites Ende 29 aufweisen. Die ersten Enden 27 der Querträger 25 sind fest mit einem ersten Abschlussblech 31 der Trägereinrichtung 15 verbunden (Fig. 1, 2), das um die Schwenkachse 17 drehbar gelagert ist. Die zweiten Enden 29 sind fest mit einem zweiten Abschlussblech 33 verbunden.

Die Bandwägeeinrichtungen 19 sind auf den zwei Querträgern 25 gleitgelagert, d.h. die Bandwägeeinrichtungen 19 können jeweils einzeln - sofern sie nicht festgeklemmt sind, wie nachstehend nach näher erläutert wird - entlang der Querträger 25 stufenlos verschoben werden. Im zusammengesetzten Zustand der Mehrspurwaage sind sämtliche Bandwägeeinrichtungen 19 zwischen den Abschlussblechen 31, 33 angeordnet.

Die Bandwägeeinrichtungen 19 sind jeweils als ein Modul ausgebildet, das als Ganzes von der Trägereinrichtung 15 abgenommen und ausgetauscht bzw. auf die Trägereinrichtung 15 aufgesetzt werden kann. Die Bandwägeeinrichtungen 19 bilden jeweils selbsttragende, aus Einzelteilen zusammengesetzte Baueinheiten. Die Mehrspurwaage besitzt folglich einen modularen Aufbau. Bei einem Ausfall einer Bandwägeeinrichtung 19 kann die jeweilige Bandwägeeinrichtung daher einfach und schnell ausgewechselt werden, wodurch Stillstandzeiten, in denen die Mehrspurwaage nicht betrieben wird, minimiert werden können.

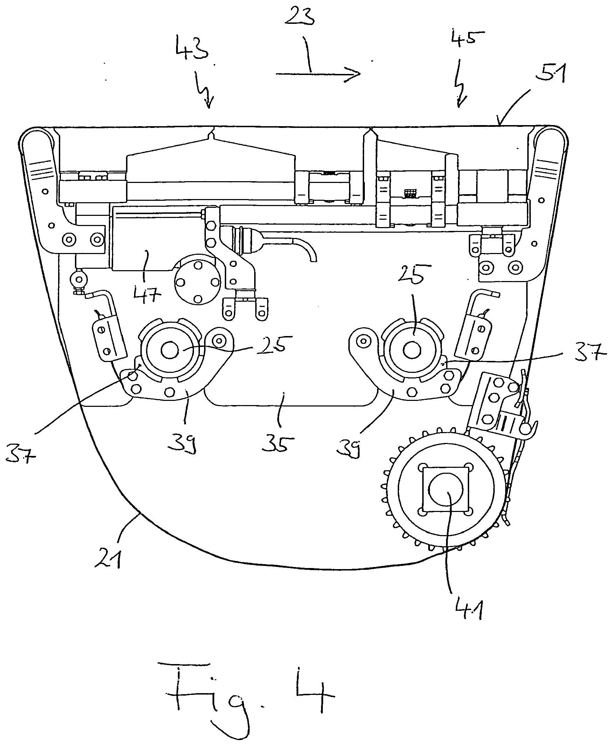

Insbesondere sind die Bandwägeeinrichtungen 19 nach oben bzw. radial von den zwei Querträgern 25 weg aus der Mehrspurwaage entnehmbar bzw. können die Bandwägeeinrichtungen 19 von radial bezüglich der Querträger 25 in die Mehrspurwaage eingesetzt werden. Wie aus Fig. 4 erkennbar ist, ist ein Rahmen 35 der jeweiligen Bandwägeeinrichtung 19 mit zwei querverlaufenden, nach unten hin offenen Ausnehmungen 37 versehen, über die die jeweilige Bandwägeeinrichtung 19 auf die Querträger 25 aufgesetzt werden kann.

Darüber hinaus umfasst die jeweilige Bandwägeeinrichtung 19 zwei betätigbare Klemmeinrichtungen 39, die jeweils als Schelle bzw. ringförmige Klammer ausgebildet sind, um die zwei Querträger 25 in den Ausnehmungen 37 zu verklemmen und damit die jeweilige Bandwägeeinrichtung 19 unverschiebbar an den Querträgern 25 zu fixieren.

Durch die radiale Abnehmbarkeit bzw. Einsetzbarkeit der Bandwägeeinrichtungen 19 von der bzw. auf die Trägereinrichtung 15 und die Verklemmbarkeit der Bandwägeeinrichtungen 19 an der Trägereinrichtung 15 kann erreicht werden, dass einerseits eine Bandwägeeinrichtung 19 einfach und schnell entnommen bzw. eingesetzt werden kann, ohne dass hierfür andere Bandwägeeinrichtungen demontiert werden müssen, und andererseits eine sichere Halterung der Bandwägeeinrichtungen 19 gewährleistet werden kann.

Die Transportgurte 21 der Bandwägeeinrichtungen 19 werden von einer gemeinsamen Antriebswelle 41 angetrieben (Fig. 3, 4), die wiederum von einem einzigen Motor 49 angetrieben wird (Fig. 1, 2). Die Antriebswelle 41 ist unterhalb des auslaufseitigen Endes der Wägeauflage 51 der jeweiligen Bandwägeeinrichtung 19 angeordnet. Ferner ist aus Fig. 4 erkennbar, das die jeweilige Bandwägeeinrichtung 19 eine Wägeplattform 43, die auf eine Wägezelle 47 wirkt, und eine Abführplattform 45 aufweist, die jeweils längenverstellbar ausgebildet sind, wobei die Gesamtlänge der beiden Plattformen 43, 45 immer gleich bleibt.

Die Bandwägeeinrichtung 19 ist in einer von der Anmelderin beim Deutschen Patent- und Markenamt eingereichten Anmeldung mit dem Titel "Wägevorrichtung" und dem amtlichen Aktenzeichen 10 2009 060 291.7 näher beschrieben. Diese Anmeldung wird bezüglich der Ausbildung der Bandwägeeinrichtung durch Bezugnahme in die Offenbarung der vorliegenden Anmeldung aufgenommen.

In der in Fig. 1 gezeigten Betriebsstellung der Trägereinrichtung 15 kann die Mehrspurwaage bestimmungsgemäß betrieben werden. In der in Fig. 2 gezeigten Servicestellung, in der die Trägereinrichtung mit den Bandwägeeinrichtungen 19 hochgeklappt ist, ist der Zugang zu den Bandwägeeinrichtungen 19 erleichtert, so dass eine Reinigung, ein Wechsel einer Bandwägeeinrichtung oder ein Service weitgehend barrierefrei möglich ist. Insbesondere können die Transportgurte 21 für eine Reinigung einfach und schnell, insbesondere werkzeuglos, demontiert bzw. abgenommen werden. Dies wird insbesondere auch dadurch ermöglicht, dass für die Wägeplattform 43 und die Abführplattform 45 ein gemeinsamer Transportgurt 21 vorgesehen ist, und nicht zwei separate Transportgurte.

### Bezugszeichenliste

- 11: Grundgestell
- 13: Standfuß
- 15: Trägereinrichtung
- 17: Schwenkachse
- 19: Bandwägeeinrichtung
- 21: Transportgurt
- 23: Transportrichtung
- 25: Querträger
- 27: Ende des Querträgers
- 29: Ende des Querträgers
- 31: Abschlussblech
- 33: Abschlussblech
- 35: Rahmen
- 37: Ausnehmung
- 39: Klemmeinrichtung
- 41: Antriebswelle
- 43: Wägeplattform
- 45: Abführplattform
- 47: Wägezelle
- 49: Motor
- 51: Wägeauflage

## Patentansprüche

1. Mehrspurwaage, nämlich Mehrspurkontrollwaage, mit mehreren nebeneinander angeordneten, jeweils eine Spur der Mehrspurwaage bildenden Bandwägeeinrichtungen (19), die jeweils als dynamische Kontrollwaage ausgebildet sind,
wobei die Bandwägeeinrichtungen (19) jeweils als ein austauschbares Modul ausgebildet sind,
**dadurch gekennzeichnet,**
**dass** die Bandwägeeinrichtungen (19) jeweils quer zur Transportrichtung (23) bewegbar gelagert sind, und
**dass** die Bandwägeeinrichtungen (19) jeweils auf einer Trägereinrichtung (15) mit wenigstens einem Querträger (25) gelagert sind.

2. Mehrspurwaage nach Anspruch 1,
**dadurch gekennzeichnet,**
**dass** die Bandwägeeinrichtungen (19) in radialer Richtung von dem wenigstens einen Querträger (25) abnehmbar sind.

3. Mehrspurwaage nach Anspruch 1 oder 2,
**dadurch gekennzeichnet,**
**dass** die Bandwägeeinrichtungen (19) jeweils wenigstens eine betätigbare Klemmeinrichtung (39) umfassen, um die jeweilige Bandwägeeinrichtung (19) an der Trägereinrichtung (15) zu fixieren.

4. Mehrspurwaage nach einem der vorstehenden Ansprüche,
**dadurch gekennzeichnet,**
**dass** die Trägereinrichtung (15) zwischen einer Betriebsstellung und einer Servicestellung verschwenkbar ist.

5. Mehrspurwaage nach einem der vorstehenden Ansprüche,
**dadurch gekennzeichnet,**
**dass** für die Bandwägeeinrichtungen (19) ein gemeinsamer Motor (49) zum Antrieb der Bänder (21) der Bandwägeeinrichtungen (19) vorgesehen ist.

6. Mehrspurwaage nach einem der vorstehenden Ansprüche,
**dadurch gekennzeichnet,**
**dass** das Band (21) der jeweiligen Bandwägeeinrichtungen (19) von einer Antriebswelle (41) angetrieben wird, die unterhalb des auslaufseitigen Endes der Wägeauflage (51) der jeweiligen Bandwägeeinrichtung (19) angeordnet ist.

7. Mehrspurwaage nach einem der vorstehenden Ansprüche,
**dadurch gekennzeichnet,**
**dass** für die Bandwägeeinrichtungen (19) eine gemeinsame Antriebswelle (41) vorgesehen ist.

8. Mehrspurwaage nach einem der vorstehenden Ansprüche,
**dadurch gekennzeichnet,**
**dass** die Bandwägeeinrichtungen (19) jeweils eine Wägeplattform (43) und eine an die Wägeplattform (43) anschließende weitere Plattform (45) umfassen, wobei die Plattformen (43, 45) jeweils eine sich in Transportrichtung (23) erstreckende Länge aufweisen, und wobei zumindest die Wägeplattform (43) längenverstellbar, nämlich auseinanderziehbar und zusammenschiebbar, ausgebildet ist.

## Claims

1. A multitrack scale, namely a multitrack checkweigher, comprising a plurality of belt weighing devices (19) which are arranged next to one another, which each form a track of the multitrack scale and which are each configured as dynamic checkweighers,
wherein the belt weighing devices (19) are each configured as replaceable modules,
**characterized in that**
the belt weighing devices (19) are each movably supported transversely to the transport direction (23); and
**in that** the belt weighing devices (19) are each supported at a support device (15) having at least one cross member (25).

2. A multitrack scale in accordance with claim 1,
**characterized in that**
the belt weighing devices (19) can be removed from the at least one cross member (25) in a radial direction.

3. A multitrack scale in accordance with claim 1 or claim 2,
**characterized in that**
the belt weighing devices (19) each comprise at least one actuable clamping device (39) to fix the respective belt weighing device (19) to the support device (15).

4. A multitrack scale in accordance with any one of the preceding claims,
**characterized in that**
the support device (15) is pivotable between an operating position and a servicing position.

5. A multitrack scale in accordance with any one of the preceding claims,
**characterized in that**
a common motor (49) for driving the belts (21) of the belt weighing devices (19) is provided for the belt weighing devices (19).

6. A multitrack scale in accordance with any one of the preceding claims,
**characterized in that**
the belt (21) of the respective belt weighing devices (19) is driven by a drive shaft (41) which is arranged beneath the outlet-side end of the weighing support (51) of the respective belt weighing device (19).

7. A multitrack scale in accordance with any one of the preceding claims,
**characterized in that**
a common drive shaft (41) is provided for the belt weighing devices (19).

8. A multitrack scale in accordance with any one of the preceding claims,
**characterized in that**
the belt weighing devices (19) each comprise a weighing platform (43) and a further platform (45) adjoining the weighing platform (43), with the platforms (43, 45) each having a length extending in the transport direction (23), and with at least the weighing platform (43) being configured as longitudinally adjustable, namely as extendable and retractable.

## Revendications

1. Balance à plusieurs voies, à savoir balance de contrôle à plusieurs voies, comportant plusieurs dispositifs de pesage à bande (19) agencés les uns à côté des autres, formant chacun une voie de la balance à plusieurs voies et réalisés chacun sous forme de balance de contrôle dynamique,
dans laquelle
les dispositifs de pesage à bande (19) sont réalisés chacun sous forme de module interchangeable,
**caractérisée en ce que**
les dispositifs de pesage à bande (19) sont montés chacun mobile transversalement à la direction de transport (23), et
les dispositifs de pesage à bande (19) sont montés chacun sur un dispositif de support (15) comprenant au moins un support transversal (25).

2. Balance à plusieurs voies selon la revendication 1,
**caractérisée en ce que**
les dispositifs de pesage à bande (19) sont amovibles dudit au moins un support transversal (25) en direction radiale.

3. Balance à plusieurs voies selon la revendication 1 ou 2,
**caractérisée en ce que**
les dispositifs de pesage à bande (19) comprennent chacun au moins un dispositif de serrage actionnable (39) pour fixer le dispositif de pesage à bande respectif (19) sur le dispositif de support (15).

4. Balance à plusieurs voies selon l'une des revendications précédentes, **caractérisée en ce que**
le dispositif de support (15) est mobile en pivotement entre une position de fonctionnement et une position de service.

5. Balance à plusieurs voies selon l'une des revendications précédentes,
**caractérisée en ce que**
pour les dispositifs de pesage à bande (19) est prévu un moteur commun (49) pour entraîner les bandes (21) des dispositifs de pesage à bande (19).

6. Balance à plusieurs voies selon l'une des revendications précédentes,
**caractérisée en ce que**
la bande (21) des dispositifs de pesage à bande respectifs (19) est entraînée par un arbre d'entraînement (41) qui est agencé au-dessous de l'extrémité côté sortie de la surface de pesage (51) du dispositif de pesage à bande respectif (19).

7. Balance à plusieurs voies selon l'une des revendications précédentes,
**caractérisée en ce que**
il est prévu un arbre d'entraînement commun (41) pour les dispositifs de pesage à bande (19).

8. Balance à plusieurs voies selon l'une des revendications précédentes,
**caractérisée en ce que**
les dispositifs de pesage à bande (19) comprennent chacun une plateforme de pesage (43) et une autre plateforme (45) qui se raccorde à la plateforme de pesage (43),
dans laquelle
les plateformes (43, 45) présentent chacune une longueur qui s'étend en direction de transport (23), et
au moins la plateforme de pesage (43) est réalisée de façon variable en longueur, à savoir de façon à pouvoir être étirée et contractée.
